Europäisches Patentamt

European Patent Office

Office européen des brevets

(11) Publication number: **0 268 926**
**A2**

(12) # EUROPEAN PATENT APPLICATION

(21) Application number: **87116569.2**

(22) Date of filing: **10.11.87**

(51) Int. Cl.⁴: **A01N 25/10** , A01N 25/12 ,
A01N 25/32 , A01N 57/12

(30) Priority: **24.11.86 US 934070**

(43) Date of publication of application:
**01.06.88 Bulletin 88/22**

(84) Designated Contracting States:
**AT BE CH DE ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Mahmood, Tariq**
**37 Drakestown Road**
**Flanders New Jersey 07836(US)**
Inventor: **Cannelongo, Joseph Frederick**
**9 Revere Road**
**Piscataway New Jersey 08854(US)**
Inventor: **Fishbein, Richard**
**18 Meadow Run Drive**
**Skillman New Jersey 08668(US)**

(74) Representative: **Wächtershäuser, Günter, Dr.**
**Tal 29**
**D-8000 München 2(DE)**

(54) **Safened sorptive granular pesticidal resin compositions for controlling soil borne pests and process for the preparation thereof.**

(57) The present invention relates to novel safened, sorptive granular pesticidal resin compositions comprising, as the active ingredient, O,O-diethyl S-{[(1,1-dimethylethyl)thio]methyl}phosphorodithioate, O,O-diethyl S-(ethylthiomethyl)phosphorodithioate or a pesticidal chemical wherein said technical grade of said pesticidal chemical has a dermal LD50, as measured on rats or rabbits, of less than 50 mg/kg. The novel compositions of the present invention are characterized by markedly reduced mammalian toxicity. Further, the present invention also relates to a process for preparing the present safened granular pesticidal compositions.

EP 0 268 926 A2

# SAFENED SORPTIVE GRANULAR PESTICIDAL RESIN COMPOSITIONS FOR CONTROLLING SOIL BORNE PESTS AND PROCESS FOR THE PREPARATION THEREOF

## BACKGROUND OF THE INVENTION

The present invention relates to safened, sorptive, granular pesticidal resin compositions which previously exhibited toxic dermal effects of the active pesticide. Examples of the type of active ingredient safened in the present compositions include O,O-diethyl S-{[(1,1-dimethylethyl) thio]-methyl}phosphorodithioate, also known as terbufos, and O,O-diethyl-S-(ethylthiomethyl)phosphorodithioate, also known as phorate, U.S Patent 2,584,655, issued to Hook on February 19, 1952, generally discloses these compounds, and U.S. Patent 2,596,076, issued to Hook on May 6, 1952, discloses terbufos, with U.S. Patent 2,759,010, issued to Lorenz et al on August 14, 1956 disclosing phorate.

Both terbufos and phorate are effective soil and systemic insecticide-nematicides and are commercially used throughout the world. Unfortunately, these compounds, although effective insecticide-nematicides, also are toxic to mammals if they should enter the mammal's circulatory system through ingestion, inhalation or dermal absorption. This toxicity is more apparent by the LD50 values of these compounds. The acute oral LD50 value in rats of phorate is 1.6-3.7 mg technical/kg and for terbufos, 1.6 mg tech nical/kg. The acute dermal toxicities in rats are 2.5-6.2 mg technical phorate/kg and 7.4 mg technical terbufos/kg animal. Likewise, the acute dermal toxicities on rabbits are 3.1-6.4 mg technical phorate/kg animal and 1.0 mg technical terbufos/kg animal.

It can be seen, therefore, that there is potential hazard for individuals exposed to handling the pesticides, such as terbufos and phorate, as well as other such pesticides with acute oral and/or acute dermal toxicities less than about 50 mg/kg. Those individuals exposed to the manufacture, purchasing, handling, transportation and use of such pesticides are at high risk of exposure. These potential health safety problems have spurred attempts to improve the LD50 values of these pesticides and to provide compositions which exhibit better margins of safety than originally available. U.S. Patent 4,059,700, issued to Lindsay on November 22, 1977, relates to a process to improve the safety of terbufos. Montmorillonite clay is used as a carrier for terbufos and phorate. This composition provides a product with an LD50 dermal toxicity, on rabbits, of about 27-37 mg/kg. Thus the dermal toxicity is 2 to 3 times less toxic than the compositions available prior to the Lindsay invention. U.S. Patent 4,485,103 and 4,343,790, issued to Pasarela on November 27, 1984 and August 10, 1982, respectively, also improve the margin of safety of insecticide-nematicide compositions containing terbufos or phorate. Coating an inert sorptive or nonsorptive granular carrier impregnated or coated with terbufos or phorate with a finely divided sorptive substrate and an acrylic polymer provides a safer composition as evidenced by rabbit dermal LD50 values of about 40 and 80 mg/kg.

Even though these inventions improve the dermal toxicities of pesticides such as terbufos and phorate, an effective resin-type reduced toxicity pesticidal composition with residual activity and good biological activity was still needed. U.S. Patent 4,554,155 issued to Allan et al on November 19, 1985 discloses controlled-release compositions which may contain a wide variety of listed pesticides, including phorate. These controlled-release compositions specifically contain kraft lignin and a biodegradable water-insoluble organic polymer that releases the pesticide by structural disintegration of the outer surfaces. As such, these compositions are based on erosion of the matrix to control the release of pesticide. Exposure of the surfaces of those compositions to the environment results in the loss of the structural integrity of the polymer and/or fracture thereof. Therefore, new surfaces of the biologically active material-polymer are exposed to the environment for further release of the component.

Resins also are used in animal collars and tags to control a variety of ectoparasites which infest such animals. For instance, U.S. Patent No. 4,150,106 issued to Dick et al on April 17, 1979 discloses animal pesticidal collars containing diazinone or diazoxone, a solid macromolecular substance chosen from solid vinyl and vinylidene substances and a plasticizer. About forty organo-phosphates are listed for possible incorporation into these animal collars, but terbufos and phorate are not among the pesticides listed. This is not, however, altogether surprising since terbufos and phorate are soil and plant systemic insecticides and are extremely toxic to mammals.

Another animal collar containing a pesticide is disclosed in U.S. Patents 4,134,977 and 4,158,051, issued to Greenberg on Janurary 16, 1979 and June 12, 1979, respectively. The Greenberg collars are prepared with dimethyl 1,2-dibromo-2,2-dichloroethyl phosphate, commonly referred to as naled, a plasticized polyvinyl chloride, a substantially non-volatile carbamate and a surface porosity control agent such as chloro-acetaldehyde, chloral, bromoacetaldehyde, bromal or the like. Those compositions provide controlled release of the insecticide as a vapor to surround the animal and as a powder that mirgrates over the coat of the animal.

U.S. Patent 4,198,782 issued to Kydonleus on April 22, 1980, discloses a method for making polymeric controlled-release pesticides by granulating a laminated sheeting material comprising a non-porous polymeric sheet, a polymeric core film containing phorate or other insecticide and a second solid non-porous polymeric sheet adhered to the insecticide-containing polymeric core material. The thus-prepared sandwich is then chopped into granulated particles. Insect control is obtained with the granulated insecticide compositions prepared as described. However, unfortunately when the laminated materials are cut to the sizes necessary for use in the field, extended activity is lost and little or no safening appears to be achieved.

Other resin compositions are disclosed in U.S. Patent 4,041,151 issued to Milionis et al on August 9, 1977 and U.S. Patent 4,145,409 issued to Pasarela on March 20, 1979. The preparation of insecticidal and acaricidal resin compositions formed into flexible collars for attaching to animals to protect said animals against attach and/or infestation by insects and acarids is disclosed in those two U.S. patents. The compositions, however, are primarily designed to deliver an insecticidal or acaridicidal agent having relatively low mammalian toxicity onto the coat and body of an animal. Pesticides with high mammalian toxicity are not listed for incorporation into resins or that such incorporation may provide a concentrate or composition with markedly improved safety.

Thus, although the above-described references provide phorate, terbufos and/or other pesticide compositions with reduced dermal toxicity and/or extended residual acitivity, the disclosed technology seems insufficient to lower the margin of safety or the oral and/or dermal LD50 values low enough to remove said pesticides from the hazardous pesticide catagory.

## SUMMARY OF THE INVENTION

The present invention provides a solution to these problems unanswered successfully by the state of the art by providing novel, safened, sorptive, granular pesticidal resin compositions which combine enhanced safety and effective residual acitivity of the product.

It is an object of the present invention, therefore, to provide pesticidal compositions and processes for the preparation thereof wherein said composition contains a highly toxic pesticidal agent, selected plastisol matrix having a high molecular weight, low viscosity polyvinyl chloride/vinyl ester copolymer resin; selected secondary plasticizers, selected surface active agents, and optionally polyalkylene glycol deactivator for the carrier, such as bentonite, attapulgite, kaolin, montmorillonite or the like clays. Surprisingly, these compositions provide an agronomically useful product which is characterized by markedly reduced mammalian toxicity.

It is an additional object of the present invention to provide pesticidal compositions, particularly compositions containing the toxic pesticides with low LD50, and to provide such pesticides in a form having significantly improved dermal mammalian toxicity and improved insecticidal-nematicidal activity.

A further object of this invention is to provide pesticidal compositions which provide a margin of safety otherwise not found in previously-available compositions containing said pesticides.

These and other objects of the present invention will become more apparent by the detailed description of the invention provided hereinbelow.

## DETAILED DESCRIPTION OF THE INVENTION

The present invention relates to safened, sorptive, granular pesticidal resin compositions for controlling soil borne pests and process for the preparation thereof. The novel safened compositions of the present invention are prepared by dry blending a pesticide, the technical grade of said pesticide having a dermal LD50, measured on rats or rabbits, of less than 50 mg/kg with a plastisol matrix having a high molecular weight, low viscosity polyvinyl chloride/vinyl ester copolymer resin, a blend of secondary plasticizers with different molecular weights, surface active agents to lower the viscosity and reduce the surface properties, and optionally, a polyaklylene glycol deactivator for the carrier. The carrier is a clay such as bentonite, attapulgite, kaolin, montmorillonite or the like.

Once blended, the mixture is sprayed onto the finely-divided sorptive carrier and then is heated to a temperature of about 120°C to 16°C, preferably 120°C to 140°C, for about 5 minutes to about one-half hour, preferably about 6 to 20 minutes. Heating of the sprayed mixture is preferably conducted in an apparatus designed to maintain the particles of the mixture in a moving state, thereby avoiding agglormeration of the sprayed particulate materials. Conventional drum and/or tube furnaces which provide a tumbling or rolling action for the heated bed of particulate material are especially useful since such an apparatus imparts a rolling or tumbling action to the heated particles, forming them into rounded pellets. Also, adjustment of the angle of incline of the drum or tube and adjustment of speed of rotation thereof provide means for controlling the size and uniformity of the pellets.

After heating or fusion of the particulate material is complete, the material is cooled, preferably to room temperature (25°C), and screened or sieved through an 18-24 mesh U.S. sieve and caught on a 48-50 sieve. This treatment yields a -18 mesh +50 mesh product. Oversize particles are broken and recycled along with fines from the sieving or screening step.

The novel compositions of the present invention comprise about 2.0% to 30.0%, by weight, preferably 2.0% to 25.0% by weight, of a technical grade pesticide, preferably a technical grade soil insecticide, systemic insecticide, nematicide or molluscicide, that has an LD50, measured on rats or rabbits, of less than 50 mg/kg; about 5.0% to 20.0%, by weight, of a polyvinyl chloride resin or polyvinyl chloride/vinyl ester copolymer or homopolyer having a weight average molecular weight of about 200,000 to 400,000 and an inherent viscosity, as determined by ASTMD 1243, of about 1.00 to 1.32; about 5.0% to 15.0%, by weight, of a plasticizing agent such as butyl benzyl phthalate, diisononyl phthalate, dibutyl phthalate, di-2-ethylhexyl phthalate, tricresyl phosphate and trioctyl phosphate; about 0.3% to 2.0%, by weight, of a heat stabilizing agent for the resin, such as an organotin stabilizer, organo barium stabilizer, zinc/calcium stearate, epoxidized soybean oil, diabasic lead phosphite or the like; about 0.5% to 2.0%, by weight, of a surface active agent, such as a nonionic surfactant. Nonionic surfactants useful in the present invention include nonylphenoxy polyethoxyethanol, octylphenoxy polyethoxyethanol, alkylarylpolyether alcohol, alkyl polyether alcohol, mixtures thereof, or the like; about 40.0% to 80.0%, by weight, of an inert, sorptive, finely-divide solid sorptive carrier such as a montmorillonite, kaolin, bentonite or attapulgite clay, corn cob grits, talc, pumice, mixtures thereof, or the like; and, optionally, about 0.0% to 2.0%, by weight, of silicon dioxide to be applied to the surface of the granules as a drying agent and a lubricant to prevent agglomeration of the particulate materials. An antifoaming agent may sometimes be needed. Additionally, when a clay such as bentonite, montmorillonite, attapulgite or kaolin is employed as the carrier, the clay may be treated with a deactivator such as a dialkyl ($C_1$-$C_4$) glycol, trialkyl ($C_1$-$C_4$) glycol, tetraalkyl ($C_1$-$C_4$) glycol or mixture of glycols such as tri, tetra and pentaethylene glycols, to inhibit degradation of the pesticide through contact with the clay. A preferred deactivator is a glycol stream blend which is pentaethylene glycol (50% max), tetraethylene gylcol (45% max), $H_2O$ (1.0 max), and the remainder triethylene glycol.

Pesticides useful in the products of the present invention include, but are not limited to, O,O-diethyl S-{[ (1,1-dimethylethyl) thio]methyl} phosphorodithioate, (terbufos); O,O-diethyl S-(ethylthiomethyl)-phosphorodithioate, (phorate); (+)-O-ethyl S-phenylethylphosphonodithioate, (fonofos); diethyl 1,3-dithiolan-2-ylidene phosphoramidate, (phosfolan); 2-methyl-2-(methylthio)-propionaldehyde O-methylcarbamoyloxine (aldicarb); O,O-diethyl 2-ethylthioethyl phosphorothioate (demeton); O-ethyl S, S-dipropyl phosphorodithioate (ethoprophos); O,O-diethyl O-2-pyrazinyl phosphorothioate (thionazin); and the like. Terbufos and phorate are especially preferred in the concentrates and finished compositions of this invention because both are excellent plasticizing agents, as well as superior soil and systemic pesticides.

These two compounds are highly effective for controlling soil borne insects and nematrodes which attack the root systems of plants. They also are effective for controlling chewing and puncturing insects and arachnids which feed on the foliage or fluids of plants.

Polymers useful in the present invention are illustrated by the following B. F. Goodrich Geon® 138 polymer's properties:

Typical
Properties

| | |
|---|---|
| Inherent viscosity, ASTM D 1243 | 1.20 |
| Specific gravity (approx.) | |
| FDA acceptable | Limited |
| Flow Properties[2] Brookfield LVF viscosity, mPa·s or cP, SPI-VD-T$_1$ | |
| 1 hour at 6 RPM | 3700 |
| 12 RPM | 3000 |

| | | |
|---|---|---|
| 1 day at | 6 RPM | 8400 |
| | 12 RPM | 8000 |
| 1 week at | 6 RPM | 18000 |
| | 12 RPM | 14000 |
| 1 month at | 6 RPM | 30000 |
| | 12 RPM | 20000 |
| Severs efflux, BFG-1010-A, gm/100 seconds | | 20.0 |
| Severs viscosity, mPa·s or cP | | 11850 |
| Particle size, microns, avg. | | 0.92 |
| Vinyl dispersion, microns, max. | | 30 |
| North fineness, SPI-VD-T10 | | 5.0 |
| Gel temperature, $^{\circ}C(^{\circ}F)$ SPI-VD-T5 | | 66(150) |
| Clarity, percent of light transmitted through 20 mil film[3] | | 91 |
| Gloss Gardner reflectance at $60^{\circ}$ angle[3] | | 91 |
| Heat stability, aged at $191^{\circ}C(375^{\circ}F)$, [3,4] | | |
| minutes to yellow | | 30[6] |
| minutes to dark | | 60[6] |
| Film Properties, ASTM D 882 | | |
| Tensile strength, MPa (psi) at | | |
| $121^{\circ}C(250^{\circ}F)$ | | 5.0(730) |
| $135^{\circ}C(275^{\circ}F)$ | | 9.5(1,380) |
| $149^{\circ}C(300^{\circ}F)$ | | 16.4(2,375) |
| $163^{\circ}C(325^{\circ}F)$ | | 17.8(2,580) |
| $177^{\circ}C(350^{\circ}F)$ | | 17.6(2,562) |
| $191^{\circ}C(375^{\circ}F)$ | | 17.4(2,525) |
| $204^{\circ}C(400^{\circ}F)$ | | 16.6(2,410) |
| Elongation, % at | | |
| $121^{\circ}C(250^{\circ}F)$ | | 100 |
| $135^{\circ}C(275^{\circ}F)$ | | 200 |
| $149^{\circ}C(300^{\circ}F)$ | | 330 |
| $163^{\circ}C(325^{\circ}F)$ | | 380 |
| $177^{\circ}C(350^{\circ}F)$ | | 395 |
| $191^{\circ}C(375^{\circ}F)$ | | 375 |
| $204^{\circ}C(400^{\circ}F)$ | | 360 |

[2]Recipe: resin, 100 parts; DOP, 60 parts.

[3]20-mil film fused 5 minutes at $177^{\circ}C(350^{\circ}F)$.

[4]Resin, 100 parts; DOP, 60; ESO, 5; stabilizer, 3.

[6]Heat aged at $163^{\circ}C(325^{\circ}F)$.

Among the secondary plasticizers useful in the preparation of the compositions of this invention are the organic phthalates, such as butyl benzyl phthalate and diisononyl phthalate, organic phosphates such as tricresyl phosphate, epoxidized soybean oil, organic trimellitates, such as trioctyl mellitate or organic citrates such as acetyl tributylcitrate, or mixtures thereof.

Useful stabilizing agents effective for stabilizing the resin include stearates, such as zinc/calcium stearates, alkaline earth metal stearate, epoxidized soybean oil, secondary octyl tins and phosphites and organo barium and cadmium complexes, or mixtures thereof.

Surfactants useful in the present invention are ones which lower the viscosity and reduce the surface properties of the components. Nonionic surfactants such as nonylphenoxy polyethoxyethanol, octylphenoxy polyethoxyethanol, alkylarylpolyether alcohol, alkyl polyether alcohol or mixtures thereof are especially useful in the sorptive granular compositions of the present invention.

The carriers of the present invention include clays such as bentonite, attapulgite, kaolin, montmorillonite, or the like, as well as other carriers such as corn cob grits, talc, pumice, or mixtures thereof.

Silicon dioxide may be useful in the present invention. Further, lubricants useful in the present invention to prevent agglomeration of the particulate composition include calcium, magnesium, aluminium and glycerol mono stearate, stearic acid, paraffin waxes, low molecular weight polyethylene and the like.

Preferred compositions of the present invention comprise about 2.0% to 25.0%, by weight, of a soil or systemic insecticide selected from terbufos, phorate, fonofos and phosfolan and preferably terbufos or phorate; about 5.0% to 20.0%, by weight, of a polyvinyl chloride dispersion resin homopolymer/copolymer composition having a weight average molecular weight of about 260,000 to 340,000 and an inherent viscosity ASTMD 1243 of about 1.13 to 1.26; about 5.0% to 15.0%, by weight, of a plasticizing agent selected from butyl benzyl phthalate and diisononyl phthalate; about 0.3% to 2.0%, by weight, of calcium/zinc stearate, a heat stabilizing agent for the resin; about 0.5% to 2.0% of the nonionic surfactant, nonylphenoxy polyethoxyethanol; about 40.0% to 65.0%, by weight, of a finely-divided montmorillonite clay carrier; about 4.0% to 6.0%, by weight, of a glycol stream blend of pentaethylene glycol, triethylene glycol and tetraethylene glycol, as the deactivator for the clay; and optionally, about 0.0% to 2.0%, by weight, of silicon dioxide.

In practice, it is found that the application of a sufficient quantity of the sorptive granular composition of the invention, to provide about 0.25 kg/ha to 8.0 kg/ha, preferably about 0.25 kg/ha to 4.0 kg/ha of the insecticide, nematicide or molluscicide, to the soil in which plants are planted or growing, will protect said plants from attack by insects, nematodes or mollusks. Moreover, it is found that such treatment will provide extended protection for the plants against insects, nematodes and mollusks attack.

The present invention is further illustrated by the examples setforth hereinbelow, said examples being illustrative and not limitative of the present invention.

EXAMPLE 1

Terbufos sorptive, granular resin compositions having reduced mammalian toxicity

Technical grade O,O-diethyl S-{[1,1-dimethylethyl)-thio]methyl}phosphorodithioate(terbufos), having an acute oral LD50 on rats of 1.6 mg/kg, is mixed with diethylene glycol, butyl benzyl phthalate, epoxidized soybean oil and calcium/zinc stearate. A high molecular weight, low viscosity vinyl chloride/vinyl ester copolymer resin having a weight average molecular weight of about 300,000 and an inherent viscosity ASTMD 1243 of 1.20 (marketed by B. F. Goodrich as Geon® 138 resin) is added to the mixture. This resulting mixture then is blended for about 10 to 20 minutes, until the mixture is uniform. This is a plastisol composition. If foaming occurs, addition of about 0.1% to 0.2%, by weight, of dimethyl polysiloxane to the mixture is sufficient to break the foam.

Finely-divided montmorillonite then is weighed into a mixing blender and sprayed with the plastisol composition prepared as described hereinabove.

When spraying is completed, the sprayed mixture is screened or sieved through an 18 mesh sieve and caught on a 50 mesh sieve. The -18, +50 mesh material is then introduced into a tube or drum furnace where the sprayed mixture is heated to a temperature of about 120°C to 160°C for about 6 to 15 minutes. Thereafter, the thus-prepared solid, sorptive, granular composition is shaken to avoid agglomeration of the heated, fused or partially fused, particles. Upon cooling, the particles formed are uniform in particle size, free flowing and relatively dust free.

The weight percent composition of this sorptive, granular product is the following:

7

| Ingredient | % W/W |
|---|---|
| Terbufos technical | 17.0 (15% Real) |
| *Vinyl chloride/vinyl ester copolmer | 12.1 |
| Butyl benzyl phthalate | 7.3 |
| Epoxidized soybean oil | 0.6 |
| Ca/Zn Stearate | 0.2 |
| **Glycol stream blend | 4.0 |
| Montmorillonite clay | 57.8 |
| Total | 100.0 |

\*     Geon® 138 resin - marketed by B.F. Goodrich

\*\*    Glycol stream blend is a mixture of tri, tetra and pentaethylene glycols.

This -18, +.50 mesh composition is evaluated on rabbits to determine the acute dermal LD50 of the product. The acute dermal LD50 value for the composition of the present invention is 226 mg/kg.

Dermal toxicity of compositions of the present invention are determined by the following procedure using male albino rabbits as the test animals.

## Materials

Five male albino rabbits weighing approximately 2.2 to 3.5 kilograms are selected for each dosage level. The hair is shaved from the entire trunk. Saran tubing or "Vinylite" film, VU 1900, 12 inches wide, 0.04 millimeters thick and of suitable length to fit around the rabbit is used. One felt cloth bandage measuring approximately 9X18 inches is used and four pieces of 1 1/2 inches adhesive tape approximately 14 inches long are used.

## Procedure for Solid Materials

The granular composition to be tested is placed in the center of the plastic film and is moistened with water. The rabbit's underside is moistened with water, and the animal is placed belly down on the material. The plastic film is then brought up and around the animal and secured at each end with strips of adhesive tape. The felt cloth is then placed under the belly and brought up and around the animal and secured to the body with the remaining two strips of adhesive tape.

## Procedure for Liquid Materials

The animal is placed on the plastic film and wrapped, and the film secured with adhesive tape. The test material is then injected under the plastic with an appropriate size needle and syringe. Then, the felt cloth is placed under the belly and brought up around the animal and secured with the two remaining strips of adhesive tape. This forms a "cuff".

Evaluation

Twenty-four hours after dosing, the "cuff" is removed, and any remaining material is brushed away. If the material cannot be removed, the animal is fitted with a fiber collar which prevents the animal from licking the treatment area. The animals are observed for 14 days, postdosing, noting signs of toxicity, skin irritation and mortality. At the end of the 14 days, the animals are sacrificed and weighted.

By the above procedure, the dermal toxicities of the compositions described in the following examples are determined.

## EXAMPLE 2

### Tebufos solid, sorptive, granular resin composition having reduced mammalian toxicity

The procedure of Example 1 is repeated with the exception that the weight percent concentrations of the several components of the finished composition are altered. The finished product is a 5.0% granular composition having an acute dermal LD50 value, measured on rabbits, of 597 mg/kg.

The weight percent composition of this sorptive granular, -18, +50 mesh, product is the following:

| Ingredient | % W/W |
|---|---|
| Terbufos | 5.7 (5.0% Real) |
| Vinyl chloride/vinyl ester copolymer | 9.1 |
| Butyl benzyl phthalate | 5.5 |
| *Glycol stream blend (mixture di, tri and tetraethylene glycols) | 4.0 |
| Epoxidized soybean oil | 0.3 |
| Ca/Zn stearate | 0.1 |
| Montmorillonite clay | 75.3 |
| Total | 100.0 |

Acute dermal LD50 = 597 mg/kg.

*Glycol stream blend is a mixture of tetraethylene glycol (50% max.), pentaethylene glycol (45% max.), $H_2O$ (1% max.) and remainder triethylene glycol.

## EXAMPLE 3

### Method for the preparation of solid, sorptive, granular pesticidal resin compositions characterized by significantly reduced mammalian toxicity

In this example, the insecticide terbufos is mixed with a clay deactivator (glycol stream blend bottoms), a nonionic surfactant (nonylphenol ethoxylate) and a plasticizer (diisononyl phthalate). Powdered high molecular weight, low viscosity vinyl chloride/vinyl ester resin copolymer then is slowly mixed, with agitation, into the above mixture. After all the resin has been dispersed in the blend, stirring is continued for an additional ten minutes in order to assure uniformity of the mixture (plastisol) for spraying. If foam is observed during the agitation, about 0.1% to 0.2% of dimethylpolysiloxane is added as an antifoaming agent.

The appropriate amount of clay carrier, about 20.0% to 30.0%, by weight, is then introduced into a mixing blender where it is sprayed with the insecticide plastisol mixture prepared hereinabove. After about 60.0% of this mixture has been sprayed onto the clay granules, addition of about one half of a silicon dioxide lubricant and drying agent is added to the mixture. Spraying of the plastisol onto the mixture is continued until the remaining liquid has been used. The remaining silicon dioxide then is added. This provides additional sorptive capacity to the clay granules. It also provides anti-caking properties and prevents the granules from agglomerating. Thereafter, the composition is classified through -18 US sieve. The fine material is collected from the composition and recycled in the process. This screened material is then subjected to fusion at 120°C to 160°C for about 6 to 10 minutes, generally about 8 minutes. After fusion, the material is shaken to avoid re-agglomeration of the particles. As the material cools, the particles become free-flowing.

The weight percent composition of this sorptive granular preparation is the following:

| Ingredient | % W/W |
|---|---|
| Terbufos technical | 2.4 (2.0% Real) |
| Vinyl chloride/vinyl ester copolymer | 2.0 |
| Diisononyl phthalate (DINP) | 12.9 |
| Nonylphenoxy polyethoxy ethanol | 0.3 |
| *Glycol stream blend | 4.0 |
| Silicon dioxide | 2.0 |
| Montmorillonite clay | 76.4 |
| Total | 100.0 |

*Glycol stream blend is a mixture of tetraethylene glycol (50% max.), pentaethylene glycol (45% max.), $H_2O$ (1% max.) and the remainder triethylene glycol.

The acute dermal LD50 value for this product, measured on rabbits, is 2153 mg/kg.

EXAMPLE 4

Preparation of a solid, sorptive, granular pesticidal resin composition characterized by significantly reduced mammalian toxicity

The procedure of Example 3 is repeated, with the exception that the concentrations of the ingredients are altered. A free-flowing granular composition in which the particle size is uniform and the product is substantially free of dust results.

The weight percent composition of this sorptive granular preparation is the following:

| Ingredient | % W/W |
|---|---|
| Terbufos technical | 4.6 (4.0% Real) |
| High molecular weight, low viscosity vinyl chloride/vinyl ester copolymer resin (Inherent viscosity ASTMD 1243 is 1.2) | 5.0 |
| Diisononyl phthalate | 12.9 |
| Nonylphenoxy polyethoxy ethanol | 0.3 |
| Silicon dioxide | 2.0 |
| Montmorillonite | 71.2 |
| Glycol stream blend (mixture di, tri and tetraethylene glycols) | 4.0 |
| Total | 100.0 |

This product is a free flowing granular composition of about -18, +50 mesh particle size.
The acute dermal LD50 value of this product, measured on rabbits, is 762 mg/kg.

EXAMPLE 5

Preparation of a solid, sorptive, granular pesticidal resin composition characterized by reduced mammalian toxicity

The procedure of Example 3 is repeated, with the exception that the concentrations of the ingredients are altered. This procedure provides a free flowing granular pesticidal composition of about -18, +50 mesh particle size and substantially free of dust.
The weight percent composition of this sorptive granular preparation is the following:

| Ingredient | % W/W |
|---|---|
| Terbufos technical | 16.1 (14.2% Real) |
| High molecular weight, low viscosity vinyl chloride/vinyl ester copolymer resin (Inherent viscosity ASTMD 1243 is 1.2) | 14.0 |
| Butyl benzyl phthalate | 4.0 |
| Diisononyl phthalate | 4.0 |
| Nonylphenoxy polyethoxy ethanol | 0.5 |
| *Glycol stream blend (mixture of tri, tetra and pentaethylene glycols) | 3.5 |
| Silicon dioxide | 1.5 |
| Montmorillonite | 56.4 |
| Total | 100.0 |

* As previously indicated.

The mammalian toxicity of this product, measured on rabbits, is the following: LD50 value (dermal) = 320 mg/kg and LD50 value (oral) = 30 mg/kg.


EXAMPLE 6

Preparation of a solid granular pesticidal resin composition characterized by reduced mammalian toxicity

The procedure of Example 3 is repeated, with the exception that the concentrations of the ingredients are altered. The product formed is a free flowing granular composition of about -18, +50 mesh particle size. The weight percent composition of this sorptive granular preparation is the following:

| Ingredient | % W/W |
|---|---|
| Terbufos | 17.2 (15.0% Real) |
| High molecular weight, low viscosity vinyl chloride/vinyl ester copolymer resin (Inherent viscosity ASTMD 1243 is 1.2) | 14.0 |
| Diisononyl phthalate | 8.0 |
| *Glycol stream blend (mixture tri, tetra and pentaethylene glycols) | 3.5 |
| Silicon dioxide | 1.5 |
| Montmorillonite | 55.8 |
| Total | 100.0 |


* As previously indicated.


The acute dermal LD50 value of this product, measured on rabbits, is 269 mg/kg.


EXAMPLE 7

Method for the preparation of solid, sorptive, granular pesticidal resin composition characterized by reduced mammalian toxicity

The procedure of Example 3 is repeated, with the exception that the concentrations of the components are altered. The product formed is a free flowing granular composition of about -18, +50 mesh particle size. The weight percent composition of this sorptive granular preparation is the following:

| Ingredient | % W/W |
|---|---|
| Terbufos | 23.0 (20.0% Real) |
| High molecular weight, low viscosity vinyl chloride/vinyl ester copolymer resin (Inherent viscosity ASTMD 1243 is 1.2) | 18.0 |
| Diisononyl phthalate | 6.0 |
| Nonylphenoxy polyethoxy ethanol | 0.3 |
| Dimethyl polysiloxane (antifoam) | 0.1 |
| *Glycol stream blend (mixture tri, tetra and pentaethylene glycols) | 4.0 |
| Silicon dioxide | 2.0 |
| Montmorillonite | 46.6 |
| Total | 100.0 |

* As previously indicated.

This product is a free flowing granular composition of essentially uniform particle size. The acute dermal LD50 value of this product, measured on rabbits, is 130 mg/kg.

EXAMPLE 8

Preparation of solid, sorptive, granular resin composition containing phorate as the pesticidal agent and characterized by significantly reduced mammalian toxicity

The procedure of Example 3 is repeated, with the exception that phorate is substituted for terbufos as the soil insecticide-nematicide and the concentrations of the components are varied.

The product formed is a free flowing granular composition of about -18, +50 mesh particle size and substantially free of dust.

The weight percent composition of this sorptive granular preparation is the following:

13

| Ingredient | % W/W |
|---|---|
| Phorate technical | 11.4 (10% Real) |
| High molecular weight, low viscosity vinyl chloride/vinyl ester copolymer resin (Inherent viscosity ASTMD 1243 is 1.2) | 9.1 |
| Butyl benzyl phthalate | 5.5 |
| Epoxidized soybean oil | 0.3 |
| Ca/Zn stearate | 0.1 |
| *Glycol stream blend (mixture of tri, tetra and pentaethylene glycols) | 4.0 |
| Montmorillonite | 59.6 |
| Total | 100.0 |

\* As previously indicated.

This product is a free flowing granular composition of essentially uniform particle size. The acute dermal LD50 value of this product, measured on rabbits, is 467 mg/kg.

EXAMPLE 9

Evaluation of various plasticizers in the preparation of solid, granular, terbufos resin compositions characterized by reduced mammalian toxicity

Terbufos is dispersed in a plasticizer, a mixture of triethylene and tetraethylene glycols, calcium/zinc stearate and nonylphyenoxy polyethoxy ethanol. To this dispersion is added a powdered high molecular weight, low viscosity vinyl chloride/vinyl ester copolymer (Inherent viscosity ASTMD 1243 is 1.2 When the copolymer is uniformly dispersed in the mixture, the resulting dispersion is then sprayed onto a tumbling bed of finely-divided montomorillonite clay. Silicon dioxide is dusted onto the surface of the particles formed by the tumbling action of the sprayed bed. The silicon dioxide acts as a drying agent and lubricant for the particles, thus helping to avoid agglomeration thereof.

The thus-prepared particular composition then is introduced into a furnace in which the tumbling bed of sprayed particles is heated or fused for about 6 to 10 minutes at a temperature of about 120°C to 160°C.

14

| Ingredient | % W/W |
|---|---|
| Terbufos (86.3%) | 18.0 |
| Glycol stream blend (mixture of tri., tetra and pentaethylene glycols) | 4.0 |
| Nonylphenoxy polyethoxy ethanol | 0.3 |
| High molecular weight, low viscosity vinyl chloride/vinyl ester copolymer (Inherent viscosity ASTMD 1243 is 1.2) | 14.0 |
| Ca/Zn stearate | 0.5 |
| *Plasticizer | 8.0 |
| Silicon dioxide | 2.0 |
| Montmorillonite | 53.2 |
| Total | 100.0 |

| *Plasticizer | Terbufos Assay % W/W | LD50 Value Measured On Rabbits mg/kg |
|---|---|---|
| Dibutyl Phthalate (DBP) | 15.30 | 197 |
| Di-2-ethyl Hexyl (DOP) | 15.35 | 143 |
| Dioctyl Adipate (DOA) | 15.30 | 171 |
| Tricresyl Phosphate (TCP) | 15.40 | 190 |
| Epoxidized Soybean Oil (ESO) | 15.00 | 171 |
| Citrate A-4 (Acetyl Tributyl Citrate) | 15.15 | 197 |
| Trioctyl Trimellitate (TOTM) | 14.40 | 147 |
| Polyester Adipate (Plasthall P643) | 14.25 | 171 |

EXAMPLE 10

Biological evaluations of extruded, pelletized PVC terbufos compositions.

The following studies were undertaken to compare the initial and residual performance against 3rd instar Diabrotica undecimpunctata howardi larvae for various types of PVC granular formulations of terbufos, as compared to the standard 15 G formulation.

In all studies, the dosage of the toxicant pesticide is calculated on the basis of the field practice of banding granules in a 7 inch band over the row. Residue studies indicate that terbufos remains in the top 3 inches of soil through the corn growing season. The dosage for terbufos 15G Systemic Insecticide-Nematicide is 8 oz of formulation per 1000 feet of row. Therefore, the volume of soil in 1000 feet by 7 inches by 3 inches is calculated and converted to liters. The amount of active pesticide in that volume is determined and then reduced to the amount required for 1 liter of soil. Finally, all dosages are converted to kg/ha equivalents.

The soil for the study is subsampled to make moisture determinations. Initially, the determinations are made by oven drying the samples and weighing them. In later studies, an Aquatest II Photovolt (New York City, NY) is used to measure soil moisture. Since 15% moisture is optimum for larval survival, an attempt is made to maintain that level during the bioassays.

The appropriate amounts of formulation are added to 1 liter of soil which had been placed into 4 ml polyethylene bags. The bag is then put into a tumbler and tumbled for 30 minutes to provide a uniform mixutre of soil and toxicant pesticide. The soil is stored in those polyethylene bags for the duration of the experiment and held at 27°C. Different soils used in the studies are identified hereinbelow.

The bioassays are set up by placing 25 ml of the treated soil into 30 ml wide-mouth screw top glass jars. About 1 cc of millet seed is added to the soil as food for the insects. The jar is capped, and the soil and seed are thoroughly mixed on a vortex mixer. After mixing, 10 southern corn rootworms about 6-8 days old, are placed into the jar. The jar is capped loosely and held at 27°C for 7 days. After 7 days, the soil is removed from the jars and examined for live larvae. Missing larvae are presumed dead since dead larvae decompose very rapidly.

For these biological evaluations, compositions are prepared as described hereinbelow for formula A and by the procedures of example 3 for formulas B-F. These Compositions have the weight percent concentrations reported hereinbelow as Formulations A, B, C, D and E.

These formulations are compared against an untreated check, a commercial 15G terbufos composition as a standard and a composition prepared as follows:

Formulation A

Terbufos technical (88% purity) is introduced into a mixer and mixed with 83% by weight of a PVC (polyvinyl chloride) dispersion prepared from 60.6% by weight of the high molecular weight Geon® 138 resin (Inherent viscosity ASTMD 1243 is 1.2), 36.7% butyl benzyl phthalate, 1.8% expoxidized soybean oil and 0.9% CA/Zn stearate. After mixing, the composition is poured on a plate and baked at 300°F for six minutes. The thin film is removed, chopped into small pieces and coated with silicon dioxide. The LD50 rabbit dermal for this product is 453 mg/kg.

0 268 926

## TABLE I

### (Formulations) Compositions of Example 10

| Ingredient | % W/W | | | | | | |
|---|---|---|---|---|---|---|---|
| | A | B | C | D | E | F | G |
| Terbufos technical 88% | 17.0 | 17.0 | 5.7 | – | 18.0 | 12.0 | 18.0 |
| PVC dispersion | 83.0 | 20.0 | 15.0 | 15.0 | 20.0 | 20.0 | 14.0 |
| Glycol stream blend | – | 4.0 | 4.0 | 4.0 | 4.0 | 4.0 | 3.5 |
| Montmorillonite | – | 59.0 | 75.3 | 69.6 | 56.5 | 62.5 | 54.5 |
| Diisononyl phthalate | – | – | – | – | – | – | 4.0 |
| Benzyl butyl phthalate | – | 3.0 | – | – | – | – | 4.0 |
| Silicon dioxide | – | – | – | – | 1.5 | 1.5 | 1.5 |
| Phorate technical | – | – | – | 11.4 | – | – | – |
| Nonylphenoxy polyethoxy ethanol | – | – | – | – | – | – | 0.5 |
| | 100.0 | 100.0 | 100.0 | 100.0 | 100.0 | 100.0 | 100.0 |
| | | | | | | | |
| Rabbit Dermal LD50 mg/kg | 453 | 226 | 597 | 467 | 190 | 190 | 320 |

| PVC Dispersion | % W/W |
|---|---|
| PVC Resin Geon® 133 | 60.0 |
| BBP | 36.7 |
| Epoxidized Soybean Oil | 1.8 |
| Ca/Zn stearate | 0.9 |
| | 100.0 |

Referring to Table II, after 26 weeks, the terbufos formulations tested at the 1.0 kg/ha level fails to break. For that reason, the results in Table II are all 0.5 kg/ha data.

In the test reported in Table III, the 0.25 kg/ha rate shortens the period of sampling since the 0.5 kg/ha samples do not show a break in activity before the supply of treated soil is exhausted.

The positive standard fails to provide sufficient mortality of the corn rootworm larvae 8 weeks after treatment. All of the PVC formulations are 97% to 100% effective at 11 weeks and, thus, they afford residual persistence that is superior to the standard 15G formulation. The best of the 3 formulations is E which remains highly active through 13 weeks.

17

## TABLE II

### PVC TEST

### PERCENT MORTALITY TO 3RD INSTAR instar Diabrotica Undecimpunctata Howardi

### WEEKS AFTER SOIL TREATMENT

| Formulation | Formu-lation | Dose kg/ha | 1 | 3 | 4 | 5 | 6 | 7 | 8 | 9 |
|---|---|---|---|---|---|---|---|---|---|---|
| Terbufos 15G | A | 0.5 | 93.3 | 93.3 | 100.0 | 100.0 | 100.0 | 100.0 | 100.0 | 100.0 |
| Terbufos 15G | B | 0.5 | 100.0 | 100.0 | 100.0 | 100.0 | 100.0 | 100.0 | 100.0 | 100.0 |
| Terbufos 5G | C | 0.5 | 100.0 | 96.6 | 100.0 | 100.0 | 100.0 | 100.0 | 100.0 | 100.0 |
| Phorate 10G | D | 0.5 | 100.0 | 100.0 | 100.0 | 100.0 | 93.3 | 90.0 | 100.0 | 100.0 |
| Terbufos 15g | Standard | 0.5 | 100.0 | 90.0 | 100.0 | 100.0 | 100.0 | 100.0 | 100.0 | 100.0 |
| Phorate 20G | Standard | 0.5 | 100.0 | 100.0 | 100.0 | 100.0 | 100.0 | 93.3 | 83.3 | 93.3 |
| Check | – | – | 10.0 | 3.3 | 3.3 | 3.3 | 0.0 | 7.0 | 13.3 | 13.3 |

*Abbott's formula calculated on these data due to check mortality in excess of 15%.

0 268 926

0 268 926

TABLE II (Cont.)

PVC TEST

PERCENT MORTALITY TO 3RD INSTAR instar Diabrotica Undecimpunctata Howardi

WEEKS AFTER SOIL TREATMENT

| Formulation | Formu-lation | Dose kg/ha | 12 | 15 | 17 | 19* | 22 | 25 | 26* |
|---|---|---|---|---|---|---|---|---|---|
| Terbufos 15G | A | 0.5 | 100.0 | 100.0 | 100.0 | 84.0 | 70.0 | 25.7 | 29.0 |
| Terbufos 15G | B | 0.5 | 100.0 | 100.0 | 100.0 | 100.0 | 96.7 | 100.0 | 70.0 |
| Terbufos 5G | C | 0.5 | 100.0 | 100.0 | 100.0 | 100.0 | 76.7 | 76.7 | 75.0 |
| Phorate 10G | D | 0.5 | 83.3 | 80.0 | 16.7 | 7.9 | 13.3 | 10.0 | 0.0 |
| Terbufos 15g | Standard | 0.5 | 100.0 | 100.0 | 100.0 | 100.0 | 76.7 | 63.3 | 70.0 |
| Phorate 20G | Standard | 0.5 | 40.0 | 73.3 | 40.0 | 36.0 | 13.3 | 3.3 | 4.0 |
| Check | – | – | 10.0 | 10.0 | 10.0 | 0.0 | 6.7 | 110.0 | 0.0 |

*Abbott's formula calculated on these data due to check mortality in excess of 15%.

## TABLE III

### PVC STUDY

#### PERCENT MORTALITY TO 3RD INSTAR Diabrotica Undecimpunctata Howardi

#### WEEKS AFTER SOIL TREATMENT

| Formulation | Formulation | Dose kg/ha | 1 | 2 | 3 | 4 | 5 | 6 |
|---|---|---|---|---|---|---|---|---|
| Terbufos | E | 0.25 | 100.0 | 100.0 | 100.0 | 93.3 | 100.0 | 100.0 |
| Terbufos | F | 0.25 | 40.0 | 31.0 | 100.0 | 100.0 | 100.0 | 100.0 |
| Terbufos | G | 0.25 | 93.3 | 93.3 | 100.0 | 100.0 | 100.0 | 100.0 |
| Terbufos | Standard | 0.25 | 100.0 | 100.0 | 100.0 | 100.0 | 100.0 | 100.0 |
| Check | - | -- | 0.0 | 3.3 | 6.7 | 3.3 | 13.3 | 6.7 |

* These data are calculated based on Abbott's Formula for mortality exceeding 15% in the check.

## TABLE III (Cont.)

### PVC STUDY

### PERCENT MORTALITY TO 3RD INSTAR Diabrotica Undecimpunctata Howardi

### WEEKS AFTER SOIL TREATMENT

| Formulation | Formulation | Dose kg/ha | 8 | 10 | 11 | 12* | 13 | 14 |
|---|---|---|---|---|---|---|---|---|
| Terbufos | E | 0.25 | 100.0 | 100.0 | 96.7 | 100.0 | 96.7 | 80.0 |
| Terbufos | F | 0.25 | 100.0 | 96.7 | 100.0 | 80.0 | 20.0 | 60.0 |
| Terbufos | G | 0.25 | 100.0 | 96.7 | 96.7 | 84.0 | 30.0 | 43.3 |
| Terbufos | Standard | 0.25 | 40.0 | 76.7 | 70.0 | 64.0 | 26.7 | 80.0 |
| Check | – | –– | 3.3 | 3.3 | 3.3 | 0.0 | 3.3 | 3.3 |

* These data were calculated based on Abbott's Formula for mortality exceeding 15% in the check.

## Claims

1. A pesticidal composition comprising: about 2.0% to 30.0%, by weight, of a pesticide, the technical grade of said pesticide having an acute dermal LD50 value, measured on rats or rabbits, of less than 50 mg/kg; about 5.0% to 20.0%, by weight, of a polyvinyl chloride or polyvinyl chloride/vinyl ester copolymer or homopolymer having a weight average molecular weight of about 200,000 to 400,000 and an inherent viscosity, as determined by ASTMD 1243, of about 1.00 to 1.32; about 5.0% to 15.0%, by weight, of a secondary plasticizing agent; about 0.3% to 2.0%, by weight, of a heat stabilizing agent for said resin; about 0.5% to 2.0%, by weight, of a surface active agent; about 40.0% to 80.0%, by weight, of a solid sorptive carrier; about 0.0% to 2.0%, by weight, of a drying agent and lubricant; and about 0.0% to 6.0%, by weight, of a deactivator; wherein said pesticidal composition is a solid sorptive granular pesticidal resin composition and has a reduced mammalian toxicity in comparison to the technical grade of said pesticide.

2. A pesticidal composition according to Claim 1, wherein said pesticide is O,O-diethyl S-{[1,1-dimethylethyl)thio]methyl}phosphorodithioate; O,O-diethyl S-(ethylthiomethyl)phosphorodithioate; diethyl 1,3-dithiolan-2-ylidenephosphoroamidate; 2-methyl-2-(methylthio)-propanal O-[(methylcarbamoyloxine; O,O-diethyl 2-ethylthioethyl phosphorothioate; O-ethyl S,S-dipropyl phosphorodithioate; O,O-diethyl O-2-pyrazinyl phosphorothioate; (±)-O-ethyl S-phenyl ethylphosphonodithioate (fonofos); or mixtures thereof.

3. A pesticidal composition according to Claim 2, wherein said pesticide is O,O-diethyl S-{[(1,1-dimethylethyl)thio]methyl}phosphorodithioate.

4. A pesticidal composition according to Claim 2, wherein said pesticide is O,O-diethyl S-(ethylthiomethyl)phosphorodithioate.

5. A pesticidal composition according to Claim 2, wherein said pesticide is O,O-diethyl S-{[(1,1-dimethylethyl)thio]methyl}phosphorodithioate or O,O-diethyl S-(ethylthiomethyl)phosphorodithioate; said resin is a high molecular weight, low viscosity vinyl chloride/vinyl ester copolymer resin having an inherent viscosity determined by ASTMD 1243 of 1.2; said plasticizing agent is butyl benzyl phthalate, diisononyl phthalate, tricresyl phosphate or mixtures thereof; said heat stabilizing agent for said resin is an organotin stabilizer, organo barium stabilizer, dibasic lead phosphate, calcium/zinc stearate, epoxidized soybean oil or mixtures thereof; said carrier is a clay carrier; said deactivator for said clay is a glycol stream blend; and said surfactant is nonylphenoxy polyethoxy ethanol, octylphenoxy polyethoxy ethanol, alkylaryl polyether alcohol, alkyl polyether alcohol, or mixtures thereof.

6. A pesticidal composition according to Claim 5 comprising: about 2.0% to 25.0%, by weight, of O,O-diethyl S-{[(1,1-dimethylethyl)thio]methyl}phosphorodithioate; about 5.0% to 20.0%, by weight, of said high molecular weight, low viscosity vinyl chloride/vinyl ester copolymer having an inherent viscosity determined by ASTMD of 1.2; about 5.0% to 15.0%, by weight, of butyl benzyl phthalate, diisononyl phthalate or mixtures thereof; about 0.5% to 2.0%, by weight, of nonylphenoxy polyethoxy ethanol; about 0.3% to 2.0%, by weight, of calcium/zinc stearate; about 40.0% to 65.0%, by weight, of montmorillonite clay; about 4.0% to 6.0%, by weight, of a glycol stream blend of tri, tetra and pentaethylene glycols; wherein said pesticidal composition is a solid sorptive granular pesticidal resin composition and has a reduced mammalian toxicity in comparison to the technical grade of O,O-diethyl S-{[(1,1-dimethylethyl)thio]methyl}phosphorodithioate.

7. A pesticidal composition according to Claim 5, comprising: about 2.0% to 25.0%, by weight, of O,O-diethyl S-(ethylthiomethyl)phosphorodithioate; about 5.0% to 20.0%, by weight, of a high molecular weight, low viscosity vinyl chloride/vinyl ester copolymer having an inherent viscosity determined by ASTMD of 1.2; about 5.0% to 15.0%, by weight, of butyl benzyl phthalate, diisononyl phthalate or mixtures thereof; about 0.5% to 2.0%, by weight, of nonylphenoxy polyethoxy ethanol; about 0.3% to 2.0%, by weight, of calcium/zinc stearate; about 40.0% to 65.0%, by weight, of montmorillonite clay; and about 4.0% to 6.0%, by weight, of a glycol stream blend of tri, tetra and pentaethylene glycols; wherein said pesticidal composition is a solid sorptive granular pesticidal resin composition and has a reduced mammalian toxicity in comparison to the technical grade of O,O-diethyl S-(ethylthiomethyl) phosphorodithioate.

8. A method for the preparation of solid, sorptive, granular pesticidal resin compositions, said method comprising: blending a pesticide, the technical grade of said pesticide having an acute dermal LD50, measured on rats or rabbits, of less than 50 mg/kg, with a plastisol matrix containing a high molecular, low viscosity polyvinyl chloride resin or vinyl chloride/vinyl ester copolymer or homopolymer having a weight average molecular weight of about 200,000 to 400,000 and an inherent viscosity as determined by ASTMD 1243 of about 1.00 to 1.32, a secondary plasticizing agent or blend of plasticizing agents with different molecular weights, a surface active agent and optionally, a polyalkylene glycol or mixture of polyalkylene glycols as deactivators for the subsequently-added sorp tive carrier that may be a clay; spraying the thus-prepared resin-pesticide onto a finely-divided sorptive carrier that is maintained in a moving state; heating the thus-prepared sprayed pesticide mixture to a temperature about 120°C to 160°C for about 5 to 30 minutes; cooling the heated mixture; and screening said mixture to obtain particulate pesticidal composition of desired particle size.

9. A method according to Claim 8, wherein said particle size is -18, +50 mesh.

10. A method according to Claim 8, wherein said pesticide is O,O-diethyl S-{[(1,1-dimethylethyl)thio]-methyl }phosphorodithioate; O,O-diethyl S-(ethylthiomethyl)phosphorodithioate; diethyl 1,3-dithiolan-2-ylidenephosphoroamidate; 2-methyl-2-(methylthio)propanal O-[(methylcarbamoyloxine; O,O-diethyl 2-ethylthioethyl phosphorothioate; O-ethyl S,S-dipropyl phosphorodithioate; O,O-diethyl O-2-pyrazinyl phosphorothioate; or (+)-O-ethyl S-phenyl ethylphosphorothioate.

11. A method according to Claim 10, wherein said pesticide is O,O-diethyl S-{[(1,1-dimethylethyl)thio]-methyl}phosphorodithioate.

12. A method according to Claim 10, wherein said pesticide is O,O-diethyl S-(ethylthiomethyl)-phosphorodithioate.

13. A method according to Claim 8, wherein about 2.0% to 30.0%, by weight, of said pesticide sellected from terbufos, phorate, phosfolan, fonofos, aldicarb, demeton, ethoprohos or thionazin is blended with about 5.0% to 15.0%, by weight, of said secondary plasticizing agent selected from butyl benzyl phthalate, diisononyl phthalate, diisononyl phthalate, mixtures of said phthalates, octylepoxy tallate, di-2-ethylhexyl phthalate, tricresyl phosphate or trioctyl phosphate, about 0.5% to 2.0%, by weight, of said nonionic surfactant and about 0.3% to 2.0%, by weight, of said stabilizing agent for said resin; adding and admixing therein when said blending is complete about 5.0% to 20.0%, by weight, of said polyvinyl chloride resin or vinyl chloride/vinyl ester copolymer having a molecular weight of from 200,000 to 400,000 with the thus-prepared pesticide mixture to obtain a uniform plastisol mixture; spraying said plastisol on a tumbling bed of finely divided carrier particles and at spraying intervals, adding silicon dioxide to said mixture being sprayed onto said carrier; sieving to obtain a composition of selected particle size; introducing said selected particles into a furnace; heating said furnace to a temperature about 120°C to 160°C for about 5 to 20 minutes; and agitating said granules.

14. A method according to Claim 13, wherein said selected particles size is -18, +50 mesh.

15. A method according to Claim 13, wherein said secondary plasticizing agent is butyl benzyl phthalate; said stabilizing agent for said resin is a mixture of about 0.2% to 1.0%, by weight, based on the finished product, of calcium/zinc stearate and about 0.2% to 1.0%, by weight, of expoxidized soybean oil; and said resin is a high molecular weight, 400,000, low viscosity vinyl chloride/vinyl ester copolymer resin having an inherent viscosity measured by ASTMD 1243 of 1.2.

16. A method according to Claim 15, wherein said pesticidal agent is terbufos or phorate; said carrier is finely divided montmorillonite clay; and said deactivator is a mixture of tri-, tetra-and pentaethylene glycols.

17. A method for the control of soil borne pests, said method comprising: applying to the soil in which said pests are present, a pesticidally-effective amount of a solid, sorptive, granular pesticidal resin composition containing about 2.0% to 30.0%, by weight, of a pesticide, the technical grade of said pesticide having an acute dermal LD50 value, measured on rats or rabbits, of less than 50 mg/kg; about 5.0% to 20.0%, by weight, of a polyvinyl chloride or polyvinyl chloride/vinyl ester copolymer or homopolymer having a weight average molecular weight of about 200,000 to 400,000 and an inherent viscosity as determined by ASTMD 1243 of about 1.00 to 1.32; about 5.0% to 15.0%, by weight, of a secondary plasticizing agent; about 0.3% to 2.0%, by weight, of a heat stabilizing agent for said resin; about 0.5% to 2.0%, by weight, of a surfactant; about 40.0% to 80.0%, by weight, of a solid sorptive carrier; about 0.0% to 2.0%, by weight, of a drying agent and lubricant; and about 0.0% to 6.0%, by weight, of a deactivator; wherein said pesticidal composition has a reduced mammalian toxicity in comparison to the technical grade of said pesticide.

18. A method according to Claim 17, wherein said pesticide is a soil insecticide, systemic insecticide, nematicide or molluscicide.

19. A method according to Claim 18, wherein said pesticide is O,O-diethyl S-{[(1,1-dimethylethyl)thio]-methyl}phosphorodithioate; diethyl 1,3-dithiolan-2-ylidenephosphoroamidate; 2-methyl-2-(methylthio)-propanal O-[methylcarbamoyloxine; O,O-diethyl 2-ethylthioethyl phosphorothioate; O-ethyl S,S-dipropyl phosphorodithioate; O,O-diethyl O-2-pyrazinyl phosphorothioate; or (+)-O-ethyl S-phenyl ethylphosphorodithioate (fonofos).

20. A method according to Claim 19, wherein said pesticide is O,O-diethyl S-{[(1,1-dimethylethyl) thio]-methyl}phosphorodithioate.

21. A method according to Claim 19, wherein said pesticide is O,O-diethyl S-(ethylthiomethyl)-phosphorodithioate.

22. A method for protecting plants from attack by insects, nematodes and mollusks, said method comprising: applying to the soil in which said plants are planted or growing, an insecticidally-nematicidally- or molluscicidally-effective amount of a solid, sorptive, granular resin composition containing about 2.0% to 30.0%, by weight, of an insecticidal, nematicidal or molluscicidal pesticide, the technical grade of said pesticide having an acute dermal LD50 value, measured on rats or rabbits, of less than 50 mg/kg; about 5.0% to 20.0%, by weight, of a polyvinyl chloride or polyvinyl chloride/vinyl ester copolymer or homopolymer having a weight average molecular weight of from about 200,000 to 400,000 and an inherent viscosity as determined by ASTMD 1243 of about 1.00 to 1.32; about 5.0% to 15.0%, by weight, of a secondary plasticizing agent; about 0.3% to 2.0%, by weight, of a heat stabilizing agent for said resin; about 0.5% to 2.0%, by weight, of a surfactant; about 40.0% to 80.0%, by weight, of a solid sorptive carrier; about 0.0% to 2.0%, by weight, of a drying agent and lubricant; and about 0.0% to 6.0%, by weight, of a deactivator; wherein said composition has a reduced mammalian toxicity in comparison to the technical grade of said pesticide.

23. A method according to Claim 22, wherein said insecticidal, nematicidal or molluscicidal agent is O,O-diethyl S-{[(1,1-dimethylethyl)thio]methyl}phosphorodithioate; O,O-diethyl S-(ethylthiomethyl)-phosphorodithioate; diethyl 1,3-dithiolan-2-ylidenephosphoroamidate; 2-methyl-2-(methylthio)propanal O-[-(methylcarbamoyloxine; O,O-diethyl 2-ethylthioethyl phosphorothioate; O-ethyl S,S-dipropyl phosphorodithioate; O,O-diethyl O-2-py razinyl phosphorothioate; or (±)-O-ethyl S-phenyl ethylphosphorodithioate (fonofos).

24. A method according to Claim 23, wherein said insecticidal-nematicidal agent is O,O-diethyl S-{[(1,1-dimethylethyl)thio]methyl}phosphorodithioate.

25. A method according to Claim 23, wherein said insecticidal-nematicidal agent is O,O-diethyl S-(ethyl-thiomethyl)phosphorodithioate.